# DEMANDE DE BREVET EUROPEEN

(11) **EP 4 333 139 A1**
(43) Date de publication de la demande: **06.03.2024**
(21) Numéro de dépôt: 22306295.1
(22) Date de dépôt: 31.08.2022
(51) Int. Cl.: H01M 10/04, H01M 10/052, H01M 10/0585

(54) **PROCÉDÉ DE FABRICATION D'UN EMPILEMENT ÉLECTROCHIMIQUE POUR BATTERIE, COMPRENANT UN APPORT DE FROID POUR DÉCOLLER UN REVÊTEMENT**

(71) Demandeur: Automotive Cells Company SE, 92300 Levallois Perret (FR); SAFT, 92300 Lavallois-Perret (FR)
(72) Inventeur: AMISSE, Robin, 92130 ISSY LES MOULINEAUX (FR)
(74) Mandataire: Lavoix

(57) **Abrégé**

Procédé de fabrication rouleau à rouleau d'un empilement électrochimique (10), comprenant :
- obtention d'un empilement (34) comportant, successivement dans une direction d'empilement (Δ), une première électrode (14), une première couche d'électrolyte (16), un premier revêtement (36),
- décollement du premier revêtement afin d'obtenir une première surface libre (38),
- fixation d'une deuxième électrode (20) de polarité opposée sur la première surface libre.
Le décollement du premier revêtement comprend :
- un apport de froid successivement dans le temps sur des portions successives du premier revêtement pour obtenir un refroidissement et un rétrécissement des portions, et
- une action mécanique pour décoller successivement chacune des portions après le rétrécissement, l'action mécanique comprenant une traction exercée sur le premier revêtement et ayant une composante dans la direction d'empilement, et/ou comprenant la mise en œuvre d'au moins une lame située entre le premier revêtement et la première couche d'électrolyte.

## Description

La présente invention concerne la fabrication d'un empilement électrochimique pour batterie, par exemple une batterie pour véhicule électrique ou hybride.

On entend par « batterie » une pluralité de cellules électrochimiques reliées électriquement les unes aux autres. Chaque cellule électrochimique comprend, en particulier, un empilement connu sous le terme de « stack », comportant des couches successives dans une direction d'empilement formant des électrodes positives et des électrodes négatives séparées par des électrolytes solides. Les électrodes positives reliées les unes aux autres forment une borne positive, et les électrodes négatives reliées les unes aux autres forment une borne négative de l'empilement électrochimique.

Il est connu, notamment dans le domaine des semi-conducteurs, de recourir à des procédés « rouleau à rouleau » (connus sous la dénomination anglaise *roll-to-roll*) permettant de réaliser des dépôts ou retraits de matière et des traitements de surface de manière continue et rapide. Au cours d'un tel procédé de fabrication, la ou les couches de matériaux sont par exemple déposées successivement sur un ou plusieurs revêtements temporaires, qui servent de supports et/ou de protection pour les matériaux, et qui sont retirés à un moment du procédé, notamment pour traiter ou empiler des couches précédemment recouvertes par le revêtement. Ces revêtements sont de différents types, selon la nature des couches dans le produit à fabriquer.

Toutefois, dans le domaine des batteries, un procédé impliquant le retrait d'un revêtement reste problématique.

Un simple arrachage du revêtement est susceptible d'endommager les couches de matériaux et de provoquer un court-circuit dans l'empilement, ce qui est cause de rebut lors de la production, ou, si le problème n'est pas détecté, de panne ultérieure pendant l'utilisation de la batterie.

Un décollement impliquant un chauffage important du revêtement n'est pas compatible avec la plupart des matériaux de l'empilement, qui comprennent en général des liants à base de polymères, ou des matériaux actifs, tous sensibles à la chaleur.

En outre, un décollement impliquant un traitement chimique acide ou alcalin est prohibé pour de nombreux matériaux, notamment les matériaux sulfurés, car ce traitement implique l'utilisation d'eau, avec un risque de réaction chimique et de dégagement de gaz toxiques. De plus, les matériaux sulfurés des batteries à l'état solide ne sont compatibles qu'avec peu de solvants, ce qui rend tout traitement chimique plus difficile.

Un but de l'invention est donc de fournir un procédé de fabrication d'un empilement électrochimique pour batterie, qui soit aussi productif qu'un procédé « rouleau à rouleau », mais qui réduise ou élimine les problèmes ci-dessus liés au retrait d'un ou plusieurs revêtements mis en œuvre dans un tel procédé.

À cet effet, l'invention a pour objet un procédé de fabrication rouleau à rouleau d'un empilement électrochimique pour batterie, comprenant les étapes suivantes :
- obtention d'un empilement comportant, successivement dans une direction d'empilement, une première électrode, une première couche d'électrolyte fixée sur la première électrode, et un premier revêtement fixé sur la première couche d'électrolyte,
- décollement du premier revêtement de la première couche d'électrolyte afin d'obtenir une première surface libre définie par la première couche d'électrolyte, et
- fixation d'une deuxième électrode, de polarité opposée à la première électrode, sur la première surface libre,
   dans lequel le décollement du premier revêtement comprend :
   - un apport de froid successivement dans le temps sur des portions du premier revêtement pour obtenir un refroidissement et un rétrécissement desdites portions, les portions se suivant dans une direction tangentielle perpendiculaire à la direction d'empilement, et
   - une action mécanique pour décoller successivement chacune des portions après le rétrécissement, l'action mécanique comprenant une traction exercée sur le premier revêtement, la traction ayant une composante dans la direction d'empilement, et/ou l'action mécanique comprenant une mise en œuvre d'au moins une lame située entre le premier revêtement et la première couche d'électrolyte pour séparer le premier revêtement et la première couche d'électrolyte.

Selon des modes de réalisation particuliers, le procédé comprend l'une ou plusieurs des caractéristiques suivantes, prise(s) isolément ou selon toutes les combinaisons techniquement possibles :
- l'apport de froid comprend l'application d'au moins un courant de fluide successivement sur lesdites portions ou sur une pièce en contact avec lesdites portions, le courant de fluide ayant une température inférieure à 270 K, de préférence inférieure à 223 K;
- le courant de fluide comprend de l'azote liquide, de l'argon, ou de l'air sec ;
- l'apport de froid comprend l'application d'une première jonction à effet thermoélectrique sur lesdites portions, ladite première jonction étant configurée pour produire du froid et ledit refroidissement étant obtenu par conduction thermique entre la première jonction et lesdites portions ;
- le décollement du premier revêtement comprend en outre, après l'apport de froid, un apport de chaleur successivement dans le temps sur lesdites portions pour obtenir un réchauffement et une dilatation desdites portions, l'apport de chaleur comprenant l'application d'une deuxième jonction à effet thermoélectrique sur lesdites portions, ladite deuxième jonction étant configurée pour produire de la chaleur et ledit réchauffement étant obtenu par conduction thermique entre la deuxième jonction et lesdites portions ;
- le décollement du premier revêtement comprend en outre un déplacement du premier empilement par rapport à un support dans la direction tangentielle et une présentation desdites portions successivement à un premier système adapté pour réaliser l'apport de froid, puis à un deuxième système adapté pour réaliser l'action mécanique, le premier système et le deuxième système occupant deux zones fixes par rapport au support ;
- le deuxième système comprend un enrouleur et est adapté pour enrouler le premier revêtement sur l'enrouleur ;
- l'empilement comprend en outre une deuxième couche d'électrolyte fixée sur la première électrode du côté opposé à la première couche d'électrolyte dans la direction d'empilement, et un deuxième revêtement fixé sur la deuxième couche d'électrolyte, le procédé comprenant en outre : un décollement du deuxième revêtement de la deuxième couche d'électrolyte afin d'obtenir une deuxième surface libre définie par la deuxième couche d'électrolyte ; et une fixation d'une troisième électrode, de polarité opposée à la première électrode, sur la deuxième surface libre ;
- les étapes d'obtention de l'empilement, de décollement du premier revêtement et de fixation de la deuxième électrode sont répétées, l'empilement électrochimique comprenant une alternance d'électrodes d'un premier type structurellement analogues à la première électrode et d'électrodes d'un deuxième type structurellement analogues à la deuxième électrode, les d'électrodes du premier type étant séparées des électrodes du deuxième type par des couches d'électrolyte structurellement analogues à la première couche d'électrolyte ;
- le premier revêtement comprend des matériaux polymères ;
- la première électrode est une électrode positive comprenant un collecteur de courant et deux couches de matériau adaptées pour former des cathodes ;
- la première couche d'électrolyte comprend un composé conducteur ionique de Li à base de composé sulfuré et/ou de polymère, comprenant possiblement un liant polymère et/ou des charges inorganiques ;
- le premier revêtement comprend un matériau polymère, un papier, ou un film métallique ; et
- la deuxième électrode est une électrode négative comprenant un collecteur de courant et deux couches de matériau adaptées pour former des anodes.

L'invention sera mieux comprise à la lecture de la description qui va suivre, donnée uniquement à titre d'exemple et faite en se référant aux dessins annexés, sur lesquels :
- la figure 1 est une vue schématique, de côté, illustrant des étapes d'un procédé selon l'invention,
- la figure 2 est une vue schématique, de côté, illustrant une étape de décollement d'un revêtement représentée sur la figure 1,
- la figure 3 est une vue schématique, de côté, illustrant une sous-étape de l'étape de décollement représentée sur les figures 1 et 2,
- la figure 4 est une vue schématique, de côté, illustrant une variante de la sous-étape représentée sur la figure 3.

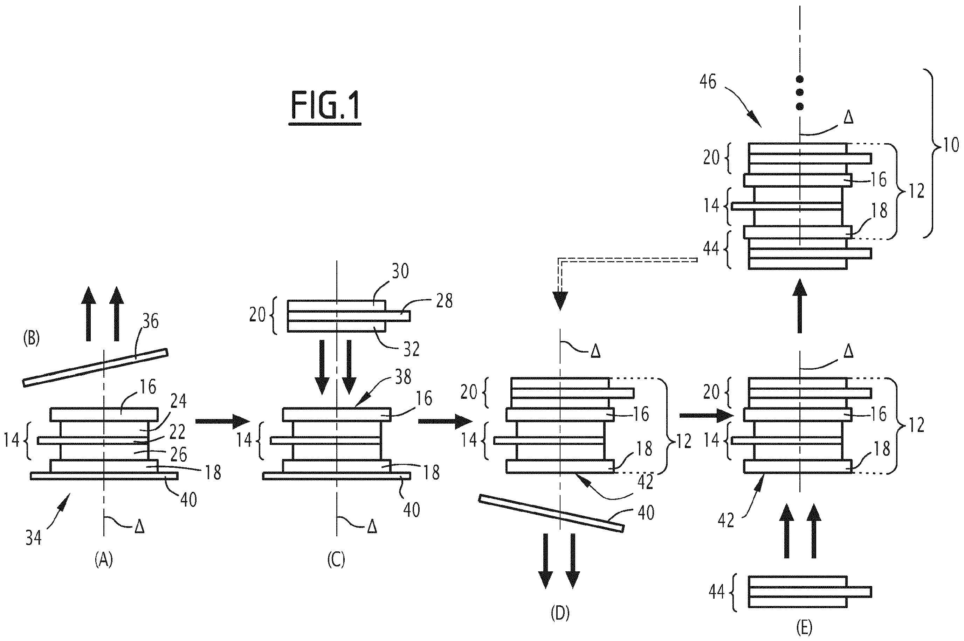

En référence à la figure 1, on décrit un procédé selon l'invention pour fabriquer un empilement électrochimique 10 pour batterie (non représentée).

Sur la figure 1, l'empilement électrochimique 10 est en train d'être produit et n'est pas complètement représenté. Dans l'exemple, l'empilement électrochimique 10 comprend un motif 12 qui se répète dans une direction d'empilement Δ. Avantageusement, l'empilement électrochimique 10 comprend au moins 15 motifs analogues au motif 12 représenté, et par exemple plusieurs dizaines. Selon un mode particulier de réalisation, le nombre de motifs est d'environ 200.

Le motif 12 comprend par exemple une première électrode 14, une première couche d'électrolyte 16 fixée sur la première électrode, une deuxième couche d'électrolyte 18 fixée sur la première électrode du côté opposé à la première couche d'électrolyte dans une direction d'empilement Δ, et une deuxième électrode 20 fixée sur la première couche d'électrolyte.

La première électrode 14 est par exemple une électrode positive. La première électrode 14 comprend avantageusement un collecteur de courant 22, et deux couches de matériau 24, 26 adaptées pour former des cathodes.

Dans le présent document, par « cathode », il faut entendre une électrode positive.

Les deux couches de matériau 24, 26 sont avantageusement situées de part et d'autre du collecteur de courant 22 dans la direction d'empilement Δ, et sont par exemple structurellement analogues l'une à l'autre.

Les deux couches de matériau 24, 26 comprennent des matériaux connus en euxmêmes pour former des cathodes, par exemple : oxydes lamellaires (par exemple oxyde de nickel-manganèse-cobalt lithié NMC, oxyde de cobalt lithié LCO, oxyde de nickel-cobalt-aluminium lithié NCA), ou polyanioniques (par exemple phosphate de fer lithié LFP, phosphate de fer-manganèse lithié LFMP), spinelles (par exemple oxyde de nickel-manganèse lithié LNMO), avec additif conducteur (noir de carbone, nanotubes de carbone) et liant polymère. Dans le cas d'une batterie tout-solide, ces matériaux sont éventuellement préparés sous forme de composites avec de l'électrolyte solide de type oxyde, polymère, gel polymère, halogénure, sulfure, ou une combinaison de ces derniers.

Le collecteur de courant 22 est de préférence en aluminium.

La deuxième électrode 20 est de polarité opposée à la première électrode 14, donc négative dans l'exemple. La deuxième électrode 20 comprend avantageusement un collecteur de courant 28 et deux couches de matériau 30, 32 adaptées pour former des anodes.

Dans le présent document, par « anode », il faut entendre une électrode négative.

Les deux couches de matériau 30, 32 sont avantageusement situées de part et d'autre du collecteur de courant 28 dans la direction d'empilement Δ, et sont par exemple structurellement analogues l'une à l'autre.

Les deux couches de matériau 30, 32 comprennent des matériaux connus en euxmêmes pour former des anodes. Elles ont, à titre d'exemple, l'une des compositions suivantes :
- graphite naturel et/ou artificiel, avec possiblement du Si métallique et/ou SiOx,
- Si métallique pur, ou Si métallique avec liant, le liant pouvant être polymère et/ou métallique (ex Cu, Al, Zn, Fe),
- composite de Si métallique avec de l'électrolyte solide ou quasi-solide à base de polymère, sulfure, oxyde, sel de Li, liquides ioniques,
- Li pur ou alliage de Li avec Ag, Au, Zn, Mg, Al, Pt,
- configuration dite *anode-less* (en anglais « sans-anode »), c'est-à-dire sans couche de lithium initiale et sans matériau d'insertion, avec une couche lithiophilique favorisant le dépôt de Li : carbone, Ag, Au, Zn, Mg, Al, Pt, Si, Sn, Sb, polymère.

Le collecteur de courant 28 est par exemple en cuivre, en métal revêtu de cuivre, en acier inoxydable, en nickel, en métal revêtu de nickel, ou en matériau polymère revêtu de cuivre/nickel ou conducteur électronique.

La première couche d'électrolyte 16 comprend un matériau connu en lui-même pour servir d'électrolyte, par exemple un composé conducteur ionique de Li à base de composé sulfuré et/ou de polymère, comprenant possiblement un liant polymère et/ou des charges inorganiques.

La deuxième couche d'électrolyte 18 est par exemple structurellement analogue à la première couche d'électrolyte 16.

Dans l'exemple, l'empilement électrochimique 10 finalement produit se présente donc, dans la direction d'empilement Δ, comme une alternance d'électrodes d'un premier type structurellement analogues à la première électrode 14 et d'électrodes d'un deuxième type structurellement analogues à la deuxième électrode 20. Les d'électrodes du premier type sont séparées des électrodes du deuxième type par des couches d'électrolyte structurellement analogues à la première couche d'électrolyte 16.

Le procédé comprend une étape A d'obtention d'un empilement 34 initial comportant, successivement dans la direction d'empilement Δ, la première électrode 14, la première couche d'électrolyte 16, et un premier revêtement 36 fixé sur la première couche d'électrolyte.

Dans l'exemple, l'empilement 34 initial comprend aussi la deuxième couche d'électrolyte 18 (fixée sur la première électrode 14 du côté opposé à la première couche d'électrolyte 16 dans la direction d'empilement Δ), et un deuxième revêtement 40 fixé sur la deuxième couche d'électrolyte.

Le procédé comprend une étape B de décollement du premier revêtement 36 de la première couche d'électrolyte 16, afin d'obtenir une première surface libre 38 définie par la première couche d'électrolyte. L'empilement 34 initial est visible sur la gauche de la figure 1, en imaginant le premier revêtement 36 fixé sur la première couche d'électrolyte 16.

Le procédé comprend ensuite une étape C de fixation de la deuxième électrode 20 sur la première surface libre 38.

Dans l'exemple, le procédé comprend aussi une étape D de décollement du deuxième revêtement 40 de la deuxième couche d'électrolyte 18, afin d'obtenir une deuxième surface libre 42 définie par la deuxième couche d'électrolyte, et une étape E de fixation d'une troisième électrode 44, de polarité opposée à la première électrode 14, sur la deuxième surface libre 42.

Le procédé est « rouleau à rouleau » (en anglais *roll-to-roll*) de manière connue en soi par l'homme du métier. On entend par là que le processus de fabrication des électrodes et éventuellement leur empilement est réalisé de façon continue, à partir de rouleaux de film (ex. feuillards/collecteurs de courant, revêtements temporaires, éventuellement séparateurs) déroulés afin d'y déposer les différentes couches de matériaux (ex. matériaux actifs, électrolyte, couches de protection) puis enroulés à nouveau en fin de chaîne. Après déposition, les films peuvent aussi être laminés et/ou découpés afin d'obtenir les dimensions et propriétés souhaitées. Sur les figures 1 à 4, les rouleaux ne sont pas représentés.

La troisième électrode 44 est par exemple structurellement analogue à la deuxième électrode 20.

Dans l'exemple, à l'issue de l'étape D, on obtient au moins le motif 12. L'étape E ajoute une électrode négative (la troisième électrode 44), et conduit à un empilement intermédiaire 46.

Les étapes A, B, C, D et E peuvent être répétées de façon à obtenir l'empilement électrochimique 10. Lors de la première répétition des étapes A à E, au lieu d'utiliser la deuxième électrode 20 à l'étape C, on utilise l'empilement intermédiaire 46 obtenu précédemment, et, à l'issue de l'étape E, on obtient un empilement (non représenté) comportant deux motifs analogues au motif 12. Chaque répétition des étapes A à E permet ainsi d'ajouter un motif analogue au motif 12 à l'empilement obtenu précédemment. Les étapes sont itérées autant de fois que nécessaire pour obtenir le nombre de motifs voulu pour l'empilement électrochimique 10.

Le premier revêtement 36 et le deuxième revêtement 40 sont avantageusement analogues l'un à l'autre. Dans l'exemple, le premier revêtement 36 et le deuxième revêtement 40 permettent le dépôt et éventuellement la densification, la découpe, l'enroulement des couches. Le premier revêtement 36 et le deuxième revêtement 40 ont éventuellement une fonction de protection de la première couche d'électrolyte 16 et la deuxième couche d'électrolyte 18.

Par exemple, le premier revêtement 36 comprend des matériaux connus en euxmêmes pour former des revêtements, par exemples des polymères, ou d'autres matériaux spécialisés. Les polymères sont par exemple du Kapton^{®}, du polyéthylène (PET), Mylar^{®}, polytétrafluoroéthylène (PTFE), polypropylène (PP), polyéthylène basse densité (LDPE), polyéthylène (PE), polystyrène (PS), éthylène tétrafluoroéthylène (ETFE), poly(fluorure de vinyle) (PVF), polyacrylates, films siliconés, ou dérivés de ces matériaux. Les autres matériaux spécialisés sont par exemple du papier de transfert ou film aluminium ou autre film métallique.

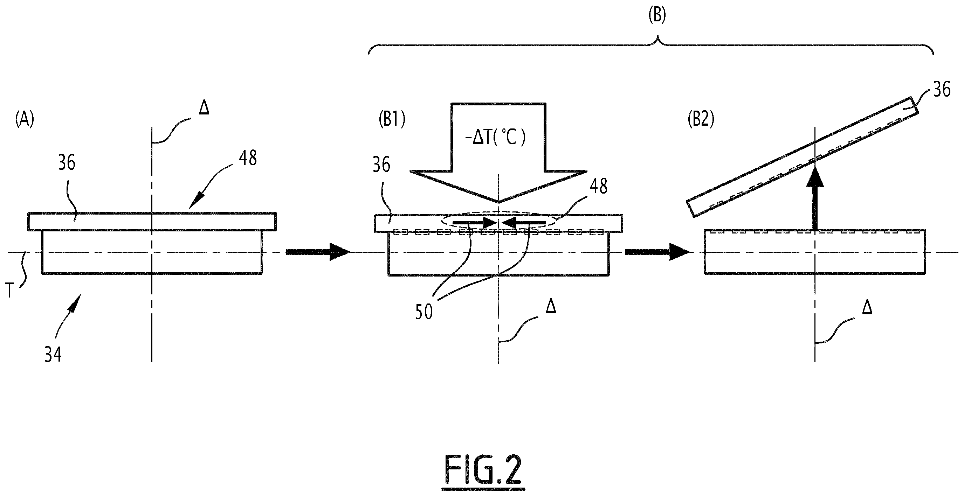

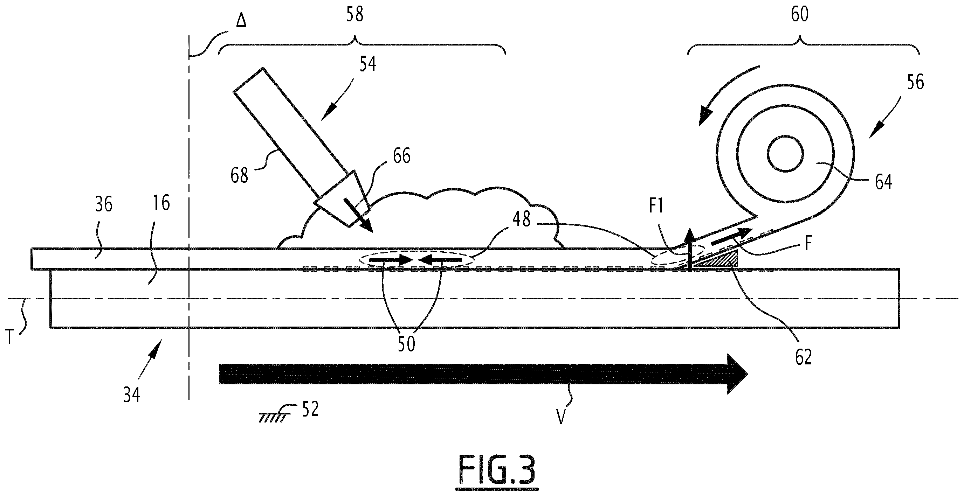

En référence aux figures 2 et 3, l'étape B de décollement du premier revêtement 36 est détaillée. L'étape D (décollement du deuxième revêtement 40) est avantageusement analogue à l'étape B et ne sera pas décrite.

Comme visible sur la figure 2, l'étape B de décollement comprend une sous-étape B1 d'apport de froid successivement dans le temps sur des portions 48 du premier revêtement 36 pour obtenir un refroidissement et un rétrécissement 50 desdites portions, et une sous-étape B2 comportant une action mécanique pour décoller successivement chacune des portions 48 après le rétrécissement.

Les portions 48 se suivent selon une direction tangentielle T perpendiculaire à la direction d'empilement Δ. Sur la figure 2, une seule des portions 48 est matérialisée. Les autres portions 48 (non matérialisées) s'en déduisent par des translations selon la direction tangentielle T.

Optionnellement, le décollement du premier revêtement 36 comprend en outre un déplacement (figuré par une flèche V sous l'empilement 34 sur la figure 3) du premier empilement 34 par rapport à un support 52 dans la direction tangentielle T, et une présentation des portions 48 successivement à un premier système 54 adapté pour réaliser l'apport de froid, puis à un deuxième système 56 pour réaliser l'action mécanique. Le premier système et le deuxième système occupe deux zones 58, 60 fixes par rapport au châssis. Dit autrement, l'empilement 34 est convoyé par rapport au support 52 et passe à proximité du premier système 54 qui réalise l'apport de froid, puis à proximité du deuxième système 56, qui réalise l'action mécanique. Ce convoyage permet à chacune des portions 48 de passer à proximité du premier système 54, puis du deuxième système 56.

Le support 52 est par exemple un châssis.

Selon une variante non-représentée, l'empilement 34 est fixe par rapport au support 52, et les premier système 54 et le deuxième système 56 sont déplacés par rapport au support 52 pour traiter successivement les portions 48.

L'action mécanique comprend par exemple une traction F (figure 3) exercée sur le premier revêtement 36.

La traction F possède une composante F1 dans la direction d'empilement Δ. Grâce au rétrécissement 50, le premier revêtement 36 est déjà au moins partiellement décollé de la première couche d'électrolyte 16, et la composante F1 est donc modeste en comparaison de la force d'arrachement qu'il faudrait appliquer sur le premier revêtement en l'absence de la sous-étape B1.

En complément ou en variante, l'action mécanique comprend la mise en œuvre d'au moins une lame 62 située entre le premier revêtement 36 et la première couche d'électrolyte 16 pour séparer le premier revêtement et la première couche d'électrolyte.

Par exemple, le deuxième système 56 comprend un enrouleur 64 et est adapté pour enrouler le premier revêtement 36 sur l'enrouleur. Avantageusement, l'enrouleur 64 applique la traction F sur chacune des portions 48.

L'apport de froid comprend par exemple l'application d'au moins un courant de fluide 66 successivement sur lesdites portions 48 ou, selon une variante non représentée, sur une pièce en contact avec lesdites portions.

Le courant de fluide 66 a par exemple une température inférieure à 270 K, de préférence inférieure à 223 K. Le courant de fluide 66 comprend avantageusement de l'azote liquide, de l'argon, ou de l'air sec.

Le premier système 54 comprend par exemple au moins une buse 68 dirigée vers l'une des portions 48 du premier revêtement 36 et adaptée pour délivrer au moins une partie du courant de fluide 66.

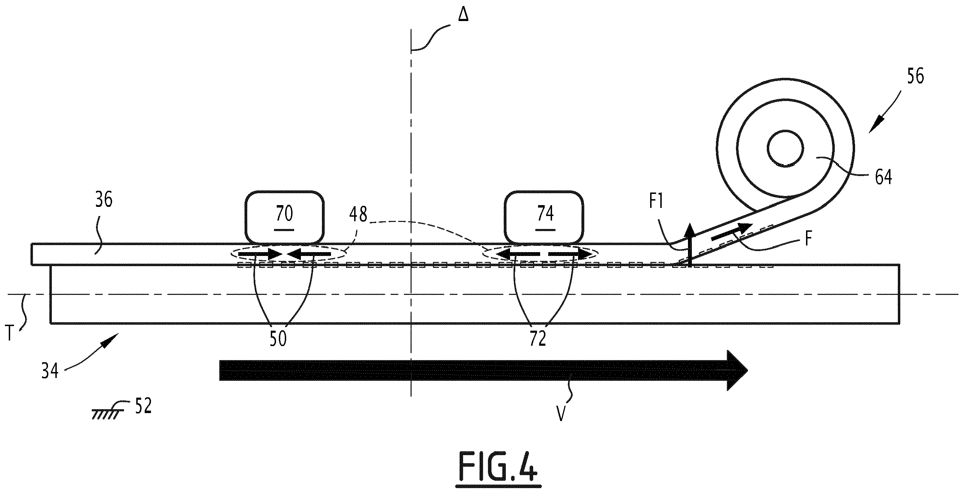

Selon une variante représentée sur la figure 4, l'apport de froid comprend l'application d'une première jonction 70 à effet thermoélectrique (encore appelé effet Peltier) sur les portions 48.

La première jonction 70 est configurée pour produire du froid et le refroidissement est obtenu par conduction thermique entre la première jonction et les portions 48.

Optionnellement, le décollement du premier revêtement 34 comprend en outre, après l'apport de froid, un apport de chaleur successivement dans le temps sur les portions 48 pour obtenir un réchauffement et une dilatation 72 desdites portions. Par exemple, l'apport de chaleur compense sensiblement l'apport de froid.

L'apport de chaleur comprend par exemple l'application d'une deuxième jonction 74 à effet thermoélectrique sur les portions 48.

La deuxième jonction 74 est configurée pour produire de la chaleur, et le réchauffement est obtenu par conduction thermique entre la deuxième jonction et les portions 48.

Avantageusement, la première jonction 70 et la deuxième jonction 74 font partie d'un même circuit électrique (non représenté).

Grâce aux caractéristiques décrites ci-dessus, le procédé de fabrication de l'empilement électrochimique 10 possède la productivité d'un procédé « rouleau à rouleau » et élimine les problèmes liés au retrait du premier revêtement 34 et du deuxième revêtement 40. L'apport de froid permet en effet de minimiser l'effort mécanique qui décolle le premier revêtement 36.

## Revendications

1. Procédé de fabrication rouleau à rouleau d'un empilement électrochimique (10) pour batterie, comprenant les étapes suivantes :
- obtention d'un empilement (34) comportant, successivement dans une direction d'empilement (Δ), une première électrode (14), une première couche d'électrolyte (16) fixée sur la première électrode (14), et un premier revêtement (36) fixé sur la première couche d'électrolyte (16),
- décollement du premier revêtement (36) de la première couche d'électrolyte (16) afin d'obtenir une première surface libre (38) définie par la première couche d'électrolyte (16), et
- fixation d'une deuxième électrode (20), de polarité opposée à la première électrode (14), sur la première surface libre (38),
dans lequel le décollement du premier revêtement (36) comprend :
- un apport de froid successivement dans le temps sur des portions (48) du premier revêtement (36) pour obtenir un refroidissement et un rétrécissement (50) desdites portions (48), les portions (48) se suivant dans une direction tangentielle (T) perpendiculaire à la direction d'empilement (Δ), et
- une action mécanique pour décoller successivement chacune des portions (48) après le rétrécissement, l'action mécanique comprenant une traction (F) exercée sur le premier revêtement (36), la traction (F) ayant une composante (F1) dans la direction d'empilement (Δ), et/ou l'action mécanique comprenant une mise en œuvre d'au moins une lame (62) située entre le premier revêtement (36) et la première couche d'électrolyte (16) pour séparer le premier revêtement (36) et la première couche d'électrolyte (16).

2. Procédé selon la revendication 1, dans lequel l'apport de froid comprend l'application d'au moins un courant de fluide (66) successivement sur lesdites portions (48) ou sur une pièce en contact avec lesdites portions (48), le courant de fluide (66) ayant une température inférieure à 270 K, de préférence inférieure à 223 K.

3. Procédé selon la revendication 2, dans lequel le courant de fluide (66) comprend de l'azote liquide, de l'argon, ou de l'air sec

4. Procédé selon l'une quelconque des revendications 1 à 3, dans lequel l'apport de froid comprend l'application d'une première jonction (70) à effet thermoélectrique sur lesdites portions (48), ladite première jonction (70) étant configurée pour produire du froid et ledit refroidissement étant obtenu par conduction thermique entre la première jonction (70) et lesdites portions (48).

5. Procédé selon la revendication 4, dans lequel le décollement du premier revêtement (36) comprend en outre, après l'apport de froid, un apport de chaleur successivement dans le temps sur lesdites portions (48) pour obtenir un réchauffement et une dilatation (72) desdites portions (48), l'apport de chaleur comprenant l'application d'une deuxième jonction (74) à effet thermoélectrique sur lesdites portions (48), ladite deuxième jonction (74) étant configurée pour produire de la chaleur et ledit réchauffement étant obtenu par conduction thermique entre la deuxième jonction (74) et lesdites portions (48).

6. Procédé selon l'une quelconque des revendications 1 à 5, dans lequel le décollement du premier revêtement (36) comprend en outre un déplacement du premier empilement (34) par rapport à un support (52) dans la direction tangentielle (T) et une présentation desdites portions (48) successivement à un premier système (54) adapté pour réaliser l'apport de froid, puis à un deuxième système (56) adapté pour réaliser l'action mécanique, le premier système (54) et le deuxième système (56) occupant deux zones (58, 60) fixes par rapport au support (52).

7. Procédé selon l'une quelconque des revendications 1 à 6, dans lequel le deuxième système (56) comprend un enrouleur (64) et est adapté pour enrouler le premier revêtement (36) sur l'enrouleur (64).

8. Procédé selon l'une quelconque des revendications 1 à 7, dans lequel l'empilement (34) comprend en outre une deuxième couche d'électrolyte (18) fixée sur la première électrode (14) du côté opposé à la première couche d'électrolyte (16) dans la direction d'empilement (Δ), et un deuxième revêtement (40) fixé sur la deuxième couche d'électrolyte (18), le procédé comprenant en outre :
- un décollement du deuxième revêtement (40) de la deuxième couche d'électrolyte (18) afin d'obtenir une deuxième surface libre (42) définie par la deuxième couche d'électrolyte (18), et
- une fixation d'une troisième électrode (44), de polarité opposée à la première électrode (14), sur la deuxième surface libre (42).

9. Procédé selon l'une quelconque des revendications 1 à 8, dans lequel les étapes d'obtention de l'empilement (34), de décollement du premier revêtement (36) et de fixation de la deuxième électrode (20) sont répétées, l'empilement électrochimique (10) comprenant une alternance d'électrodes d'un premier type structurellement analogues à la première électrode (14) et d'électrodes d'un deuxième type structurellement analogues à la deuxième électrode (20), les d'électrodes du premier type étant séparées des électrodes du deuxième type par des couches d'électrolyte structurellement analogues à la première couche d'électrolyte (16).

10. Procédé selon l'une quelconque des revendications 1 à 9, dans lequel le premier revêtement (36) comprend des matériaux polymères.

11. Procédé selon l'une quelconque des revendications 1 à 10, dans lequel la première électrode (14) est une électrode positive comprenant un collecteur de courant (22) et deux couches de matériau (24, 26) adaptées pour former des cathodes.

12. Procédé selon l'une quelconque des revendications 1 à 11, dans lequel la première couche d'électrolyte (16) comprend un composé conducteur ionique de Li à base de composé sulfuré et/ou de polymère, comprenant possiblement un liant polymère et/ou des charges inorganiques.

13. Procédé selon l'une quelconque des revendications 1 à 12, dans lequel le premier revêtement (36) comprend un matériau polymère, un papier, ou un film métallique.

14. Procédé selon l'une quelconque des revendications 1 à 13, dans lequel la deuxième électrode (20) est une électrode négative comprenant un collecteur de courant (28) et deux couches de matériau (30, 32) adaptées pour former des anodes.
